# EUROPEAN PATENT APPLICATION

(11) **EP 1 720 312 A1**
(43) Date of publication of application: **08.11.2006**
(21) Application number: 05020928.7
(22) Date of filing: 26.09.2005
(51) Int. Cl.: H04L 29/06

(54) **Media Access Control Address based method for securing access to a local area**

(30) Priority: 03.05.2005 US 908231
(71) Applicant: Zyxel Communications Corporation, Hsien Hsin chu (TW)
(72) Inventor: Su, Yuan-Chi, Hsin-Chu City (TW)
(74) Representative: Weber, Joachim

(57) **Abstract**

A method for local area network (LAN) security includes monitoring connections between ports (P2, P4, P5) of a central device (12) and a plurality peripheral devices (14a, 14b, 14c) which are respectively cable-connected to the ports (P2, P4, P5), and disabling one of the ports (P2, P4, P5) after detecting a corresponding peripheral device (14a, 14b, 14c) is disconnected from the port (P2, P4, P5).

## Description

The present invention relates to a method for local area network (LAN) security according to the pre-characterizing clause of claim 1.

Unauthorized access to information, and unintended or unauthorized use of information in local area networks (LANs) may seriously damage individuals and organizations. Even though LANs can provide a high degree of privacy and security from outside threats, especially when used in conjunction with a firewall, unfortunately, there are still some ways to breach (i.e. hack) the security of LANs . For example, someone can steal a user's ID and password by using a Trojan virus.

This in mind, the present invention aims at providing a method to improve local area network (LAN) security.

This is achieved by a method for local area network according to claim 1. The dependent claims pertain to corresponding further developments and improvements.

As will be seen more clearly from the detailed description following below, the claimed method includes disabling one of ports of a central device when connection to a corresponding peripheral device is detected to be removed.

In the following, the invention is further illustrated by way of example, taking reference to the accompanying drawings. Thereof
Fig. 1 is block diagram of a local area network adopting the method of the present invention,
Fig. 2 is a flowchart describing how to control the ports of the central device shown in Fig. 1,
Fig. 3 is a diagram of a look-up table of the central device shown in Fig. 1, and
Fig. 4 is a flowchart describing how to authorize the clients to access the server shown in Fig. 1.

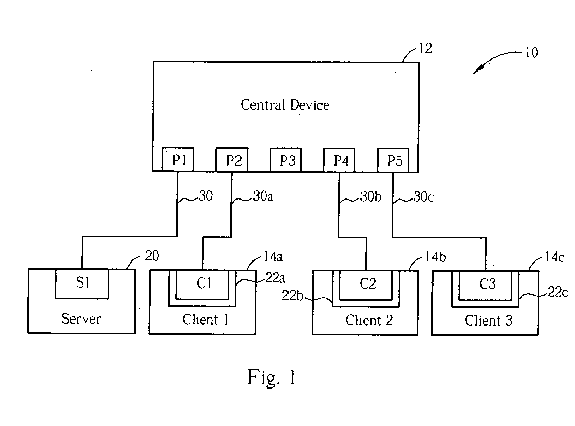

Please refer to Fig. 1, which is a block diagram of a local area network (LAN) 10 adopting the method of the present invention. A plurality of clients 14a-14c are connected to a central device 12 via cables 30a-30c. In this embodiment, the cables 30a-30c are RJ-45 network cables, the clients 14a-14c are personal computers, and the central device 12 can be a hub, a router, or a switch for controlling connections and communications of the clients 14a-14c with a server 20. The central device 12 has five ports P1-P5. The first port P1 is used to connect to a port S1 of the server 20 via another cable 30, and the other ports P2, P4, P5 of the central device 12 are used to connect to the ports C1-C3, respectively, of the clients 14a-14c. In this case, the port P3 is temporarily not used. The clients 14a-14c can access the server 20 via the central device 12, and the central device 12 controls the authorization of the clients 14a-14c for accessing the server 20.

Each of the clients 14a-14c respectively has a network adapter 22a, 22b, or 22c for communicating with the central device 12. According to the network protocol, such as TCP/IP, the manufacturer of the network adapter 22a-22c must assign a unique media access control (MAC) address to each of the network adapters 22a-22c. Each MAC address is burned into a nonvolatile memory of the network device, i.e. an EEPROM or a flash memory. Therefore, in theory, it is impossible that two network devices have the same MAC address. The MAC addresses of the network devices, hence, can be use to distinguish the network devices from each other.

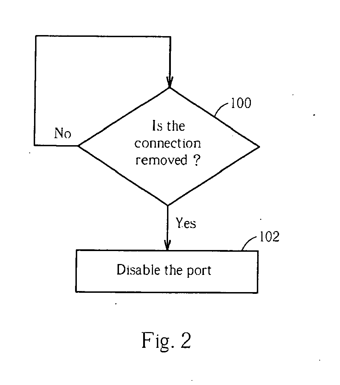

Please refer to Fig. 2, which is a flowchart describing how to control the ports P2-P5 of the central device 12. The central device 12 has sensors or specific circuits for respectively monitoring the connection statuses of the ports P2-P5 with the clients 14a-14c (step 100). If any of the connections between ports P2-P5 and the clients 14a-14c is detected to be removed, the corresponding port P2, P4 or P5 is disabled by the central device 12 (step 102). For example, if the plug of the network cable 30c is removed from the port P5 or from the port C3, the central device 12 detects the situation and then disables the port P5. It is noted that power switches of the clients 14a-14c do not influence the monitoring by the central device 12. In other words, as long as the network cables 30a-30c are physically kept connected with the ports P2-P5 of the central device 12 and the ports C1-C3 of the network adapters 22a-22c, the central device 12 is not triggered to disable a port P2, p4, and P5. When any of the ports P2-P5 is disabled, the central device 12 forbids all packets transmitted to the disabled port until the administrator of the LAN 10 enables the disabled port. Therefore, if any of the clients 14a, 14b, or 14c is replaced, the central device 12 detects such situation by monitoring the connections with the clients 14a-14c. The security of the LAN 10, hence, is not easily broken by an unauthorized device.

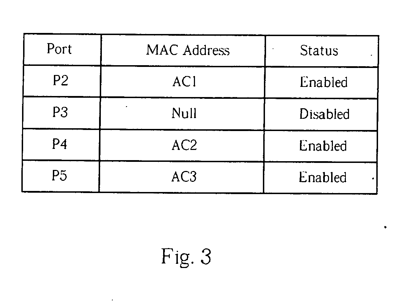

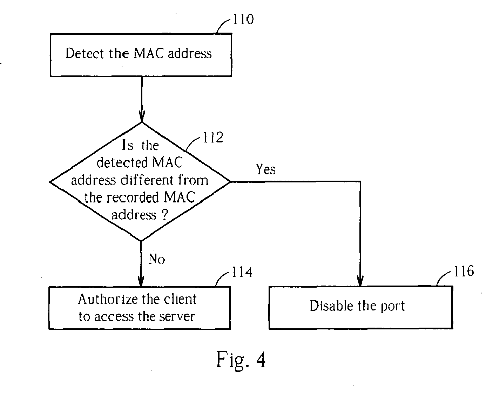

In another embodiment, the central device 10 further controls the functionality of the ports P2-P5 by comparing the MAC addresses. Please refer to Figs. 3-4. Fig. 3 is a diagram of a look-up table of the central device 12 for recording the MAC addresses of the network adapters 22a-22c, and Fig. 4 is a flowchart for describing how to authorize the clients 14a-14c to access the server 20 by comparing the MAC addresses. The central device 12 uses the look-up table to record the MAC addresses of the clients 14a-14c and to control the authorization for accessing the server 20. In an initial state, an administrator of the LAN 10 sets up the look-up table of the central device 12. While setting up the look-up table, the MAC addresses of the authorized clients 14a-14c are recorded in association with the indices of the ports P2-P5. For example, the MAC address recorded in the look-up table corresponded to the port P2 is the MAC address AC1 of the first client 14a, the MAC address corresponded to the port P4 is the MAC address AC2 of the second client 14b, and the MAC address corresponded to the port P5 is the MAC address AC3 of the third client 14c. When any of the clients 14a-14c asks the central device 12 for authorization to access the server 20, the central device 12 detects the MAC address of the asking client (step 110, Fig.4) and then compares the detected MAC address with the corresponding MAC address recorded in the look-up table (step 112). For example, when the client 14b asks for authorization, the central device 12 detects the MAC address of the network adapter 22b and then compares the detected MAC address of the network adapter 22b with the MAC address AC2 in the look-up table. If the detected MAC address of the network adapter 22b is different from the MAC address AC2, the central device 12 disables the port P4 (step 116). Oppositely, if the detected MAC address of the network adapter 22b is the same as the MAC address AC2, the central device 12 authorizes the client 22b to access the server 20 (step 114). Therefore, even if a password and ID for logging onto the server 20 are stolen, as long as the MAC addresses do not match, a device with the wrong MAC address cannot access the server 20 via the central device 12 at all. Additionally, in this embodiment, when the central device 12 operates, the connections between the ports P2-P5 and the clients 14a-14c are monitored as in the previous embodiment.

Finally, in both embodiments, any disabled port can be enabled after a re-authorization procedure. Such a procedure can include repeating one of the previously described methods or can be a manual procedure carried out by a system administrator.

In comparison with the prior art, the method according to the present invention controls security by monitoring the connections between the ports of a central device and peripheral devices. If any connection is physically removed, the corresponding port of the central device is disabled. Moreover, authorized MAC addresses are compared with detected MAC addresses, so any unauthorized replacement of the network adapter can be easily detected.

## Claims

1. A method for local area network (LAN) security, the method **characterised by**:
monitoring connections between ports (P2, P4, P5) of a central device (12) and a plurality of peripheral devices (14a, 14b, 14c) that are respectively cable-connected to the ports (P2, P4, P5); and
disabling one of the ports (P2, P4, P5) after detecting a corresponding peripheral device (14a, 14b, 14c) is disconnected from the port (P2, P4, P5).

2. The method of claim 1 further **characterised by**:
recording media access control (MAC) addresses of the peripheral devices (14a, 14b, 14c) in association with indices of the ports (P2, P4, P5).

3. The method of claim 2 further **characterised by**:
authorizing the peripheral devices (14a, 14b, 14c) to access a resource (20) via the central device (12) through the ports (P2, P4, P5); and
detecting the MAC address of each of the peripheral devices (14a, 14b, 14c) before authorizing the peripheral device (14a, 14b, 14c) to access the resource (20).

4. The method of claim 3 further **characterised by**:
determining whether to authorize one of the peripheral devices (14a, 14b, 14c) to access the resource (20) via the central device (12) according to the detected MAC address of the peripheral device (14a, 14b, 14c) and the MAC address recorded in association with the index of the port (P2, P4, P5) connected to the peripheral device (14a, 14b, 14c).

5. The method of claim 3 further **characterised by**:
forbidding one of the peripheral devices (14a, 14b, 14c) from accessing the resource (20) via the central device (12) if the detected MAC address of the peripheral device (14a, 14b, 14c) is different from the MAC address recorded in association with the index of the port (P2, P4, P5) connected to the peripheral device (14a, 14b, 14c).

6. The method of claim 3 further **characterised by**:
disabling one of the ports (P2, P4, P5) if the detected MAC address of the peripheral device (14a, 14b, 14c) connected to the port (P2, P4, P5) is different from the MAC address recorded in association with the index of the port (P2, P4, P5) .

7. The method of claim 1 further **characterised by**:
enabling the disabled port (P2, P3, P4, P5) after a re-authorization procedure.
